# EUROPEAN PATENT SPECIFICATION

(11) **EP 2 779 693 B1**
(45) Date of publication and mention of the grant of the patent: **31.08.2016**
(21) Application number: 14158832.7
(22) Date of filing: 11.03.2014
(51) Int. Cl.: H04R 1/44, H04R 1/02, H04R 1/08, H04M 1/03, H04M 1/18, H04R 7/10

(54) **Waterproof sound transmitting member**
Wasserdichtes Schallübertragungselement
Élément de transmission de son étanche à l'eau

(30) Priority: 11.03.2013 JP 2013047799
(43) Date of publication of application: 17.09.2014
(73) Proprietor: NITTO DENKO CORPORATION, Osaka 567 (JP)
(72) Inventor: Abe, Yuichi, IBARAKI-SHI, OSAKA, 567-8680 (JP); Karube, Yuki, IBARAKI-SHI, OSAKA, 567-8680 (JP)
(74) Representative: Intès, Didier Gérard André

(56) References cited:
- WO-A1-2012/117476
- US-A- 5 828 012
- US-A1- 2005 077 102
- US-A1- 2012 188 690
- US-B1- 6 512 834

## Description

The present invention relates to a waterproof sound transmitting member suitable for providing waterproof function to electronic devices equipped with acoustic components such as microphones and speakers, and in particular, to a waterproof sound transmitting member including a waterproof sound transmitting membrane.

Portable electronic devices, such as cellular phones, cordless phones, smartphones, notebook computers, tablet computers, electronic notebooks, digital cameras, and portable game machines, are required to be waterproof because the devices are often used outdoors. In these electronic devices, acoustic components, specifically, transducers serving as sound transmitters or sound receivers, such as speakers, microphones, and buzzers, need to transmit sound to the outside of the devices and to receive sound from the outside thereof. Therefore, various studies have been conducted to achieve both sound transmission and waterproofness.

One of the known ways to provide both waterproofness and sound transmission (waterproof sound transmission function) to an electronic device is to attach a waterproof sound transmitting membrane to a housing of the electronic device to cover an opening formed in the housing. Nonwoven fabrics or porous polymer membranes and films are used as waterproof sound transmitting membranes. Waterproof sound transmitting members each including a waterproof sound transmitting membrane and a fixing member for fixing the waterproof sound transmitting membrane are disclosed in JP 2001-148897 A, JP 2004-083811 A, and JP 2012-165353 A, for example. JP 2012-165353 A discloses a waterproof sound transmitting member including a waterproof sound transmitting membrane in which two sheets having different stiffnesses are laminated together to reduce chattering noise. U.S. Patent 5,828,012 discloses a sound-transmissive cover assembly comprising a protective membrane layer which is selectively bonded to a layer of porous support material.

As the fixing member for fixing the waterproof sound transmitting membrane, an adhesive sheet or an adhesive disposed or applied between the edge of the opening to be protected from water and the outer edge of the waterproof sound transmitting membrane is known. However, when an adhesive sheet or an adhesive is used as the fixing member, the waterproof sound transmitting membrane is usually attached to the inner surface of the housing. Therefore, the waterproof sound transmitting membrane sagging under its own weight may come into contact with the transducer and other components around the transducer, resulting in distortion of sound. Since electronic devices have recently become smaller and lighter, the risk that sagging of a waterproof sound transmitting membrane may cause deterioration in sound quality has increased. In particular, a waterproof sound transmitting membrane having a large diameter is more likely to come into contact with the surrounding components.

In view of the above, it is an object of the present invention to provide a waterproof sound transmitting member having a structure suitable for preventing deterioration in sound quality due to sagging of the waterproof sound transmitting membrane.

The present invention provides a waterproof sound transmitting member which is disclosed in appended claim 1 and includes: a waterproof sound transmitting membrane that allows sound to pass therethrough and prevents water from passing therethrough, the waterproof sound transmitting membrane having a first surface and a second surface opposite to the first surface; and a first adhesive sheet and a second adhesive sheet that are disposed on the first surface. When viewed in a direction perpendicular to the first surface, the first adhesive sheet has a closed frame shape, and the second adhesive sheet is disposed within the frame formed by the first adhesive sheet and is spaced from the first adhesive sheet. The waterproof sound transmitting membrane has a maximum diameter of 7 mm to 20 mm. When viewed in a direction perpendicular to the first surface, an area of the second adhesive sheet is at least one tenth and not more than one half an area of a region surrounded by an inner edge of the frame formed by the first adhesive sheet.

In the waterproof sound transmitting member of the present invention, the waterproof sound transmitting membrane and the first adhesive sheet block the passage of water through the opening to be protected from water. The second adhesive sheet also is disposed on the waterproof sound transmitting membrane so that the first and second adhesive sheets are placed on the same surface. The second adhesive sheet allows to ensure good sound transmission while preventing sagging of the waterproof sound transmitting membrane.
FIG. 1 is a top view showing an embodiment of a waterproof sound transmitting member of the present invention.
FIG. 2 is a top view showing another embodiment of the waterproof sound transmitting member of the present invention.
FIG. 3 is an example of a cross-sectional view of the waterproof sound transmitting member, taken along the line X-X in FIG. 1 or FIG. 2.
FIG. 4 is another example of the cross-sectional view of the waterproof sound transmitting member.
FIG. 5 is a top view showing an embodiment of an acoustic component including the waterproof sound transmitting member.
FIG. 6 is a cross-sectional view of the acoustic component, taken along the line X-X in FIG. 5.
FIG. 7 is a cross-sectional view of the acoustic component including the waterproof sound transmitting member in FIG. 4.

Hereinafter, embodiments of the present invention will be described with reference to the drawings, but the present invention is not limited to the following description. As is apparent from the following description and drawings, a "principal surface" in this specification refers to the surface extending in a direction perpendicular to the thickness direction of a membrane or a sheet.

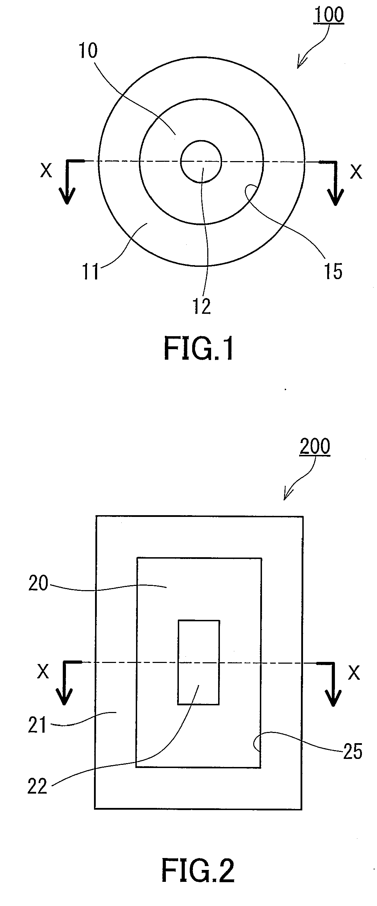

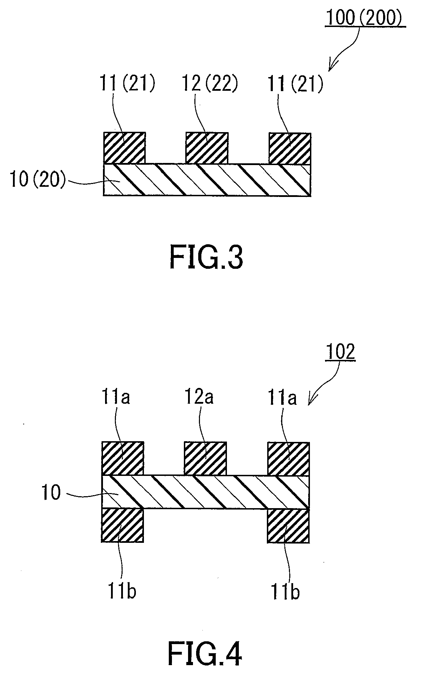

FIG. 1 is a view of a waterproof sound transmitting member 100 according to an embodiment of the present invention, as seen from above in a direction perpendicular to the principal surface of a waterproof sound transmitting membrane 10. FIG. 3 is a cross-sectional view of the waterproof sound transmitting member 100, taken along the line X-X. The waterproof sound transmitting member 100 includes the waterproof sound transmitting membrane 10 that allows sound to pass therethrough and prevents liquid from passing therethrough, and a first adhesive sheet 11 and a second adhesive sheet 12 that are disposed on a first surface of the waterproof sound transmitting membrane 10. The first surface is one principal surface of the waterproof sound transmitting membrane 10 selected from two principal surfaces thereof. No adhesive sheet is disposed on a second surface of the waterproof sound transmitting membrane 10. The second surface is the other principal surface of the waterproof sound transmitting membrane 10. For example, the first adhesive sheet 11 and the second adhesive sheet 12 are adhesive sheets, both sides of which have adhesive properties. That is, they are double-sided adhesive tapes. The waterproof sound transmitting membrane 10 is a membrane member whose principal surface has a circular outline. The first adhesive sheet 11 is a closed frame having a disk-shaped window formed in the center of a disk-shaped sheet. More specifically, the first adhesive sheet 11 is a ring-shaped member disposed on the waterproof sound transmitting membrane 10 such that the outer edge of the first adhesive sheet 11 and the outer edge of the waterproof sound transmitting membrane 10 coincide with each other. The second adhesive sheet 12 is disposed within the frame formed by the first adhesive sheet 11, that is, in a region surrounded by the inner edge 15 of the first adhesive sheet 11, and is spaced from the first adhesive sheet 11, when viewed in a direction perpendicular to the first surface of the waterproof sound transmitting membrane 10. The second adhesive sheet 12 has a circular shape smaller than a circular region surrounded by the inner edge 15, when viewed in the direction perpendicular to the first surface. Thus, the first surface of the waterproof sound transmitting membrane 10 is divided into a ring-shaped region covered by the first adhesive sheet 11, a ring-shaped region to which the waterproof sound transmitting membrane 10 is exposed between the first adhesive sheet 11 and the second adhesive sheet 12, and a circular region covered by the second adhesive sheet 12, in order from the outer edge side. The area of the principal surface of the waterproof sound transmitting membrane 10 is larger than the total of the area of the principal surface of the first adhesive sheet 11 and the area of the principal surface of the second adhesive sheet 12.

FIG. 2 is a top view showing a waterproof sound transmitting member 200 according to another embodiment of the present invention. The waterproof sound transmitting member 200 is the same as the waterproof sound transmitting member 100 shown in FIG. 1, except for the shape of a waterproof sound transmitting membrane 20, the shape of a first adhesive sheet 21, and the shape of a second adhesive sheet 22, as seen from above in the direction perpendicular to the first principal surface of the waterproof sound transmitting membrane 20. FIG. 3 shows the cross-sectional view of the waterproof sound transmitting member 200, taken along the line X-X in FIG. 2. The waterproof sound transmitting membrane 20 is a membrane member whose principal surface has a rectangular outline. The first adhesive sheet 21 has a closed frame shape having a rectangular window formed in the center of a rectangular sheet. More specifically, the first adhesive sheet 21 is a rectangular frame-shaped member disposed on the waterproof sound transmitting membrane 20 such that the outer edge of the first adhesive sheet 21 and the outer edge of the waterproof sound transmitting membrane 20 coincide with each other. The second adhesive sheet 22 is disposed within the frame formed by the first adhesive sheet 21, that is, in a region surrounded by the inner edge 25 of the first adhesive sheet 21, and is spaced from the first adhesive sheet 21, when viewed in the direction perpendicular to the first surface of the waterproof sound transmitting membrane 20. The second adhesive sheet 22 has a rectangular shape smaller than a rectangular region surrounded by the inner edge 25 of the first adhesive sheet 21, when viewed in the direction perpendicular to the first surface. Thus, the first surface of the waterproof sound transmitting membrane 20 is divided into a rectangular frame-shaped region covered by the first adhesive sheet 21, a rectangular frame-shaped region to which the waterproof sound transmitting membrane 20 is exposed between the first adhesive sheet 21 and the second adhesive sheet 22, and a rectangular region covered by the second adhesive sheet 22, in order from the outer edge side. The area of the principal surface of the waterproof sound transmitting membrane 20 is larger than the total of the area of the principal surface of the first adhesive sheet 21 and the area of the principal surface of the second adhesive sheet 22.

Preferably, the area of the second adhesive sheet 12 (22) is not more than one half the area of a region surrounded by the inner edge 15 (25) of the frame formed by the first adhesive sheet 11 (21), when viewed in the direction perpendicular to the first surface of the waterproof sound transmitting member 10 (20). When the area of the second adhesive sheet 12 (22) satisfies the above condition, it is easier to ensure good sound transmission of the waterproof sound transmitting member 100 (200) while preventing sagging of the waterproof sound transmitting membrane 10 (20). The lower limit of the area of the second adhesive sheet 12 (22) is not particularly limited, but it is, for example, at least one tenth the area of the region surrounded by the inner edge 15 (25) of the frame formed by the first adhesive sheet 11 (21), when viewed in the direction perpendicular to the first surface of the waterproof sound transmitting member 10 (20).

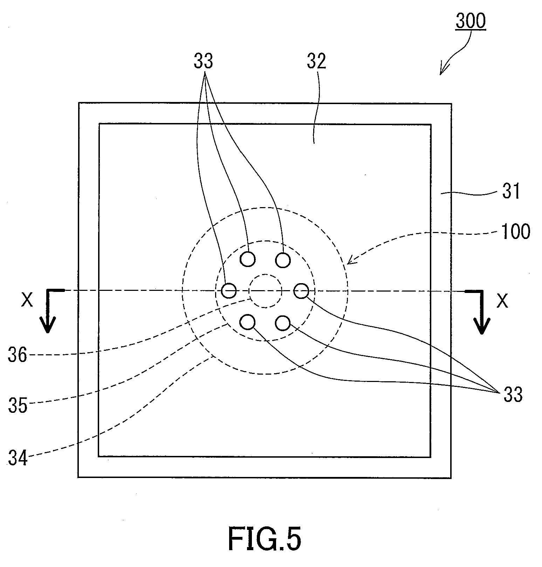

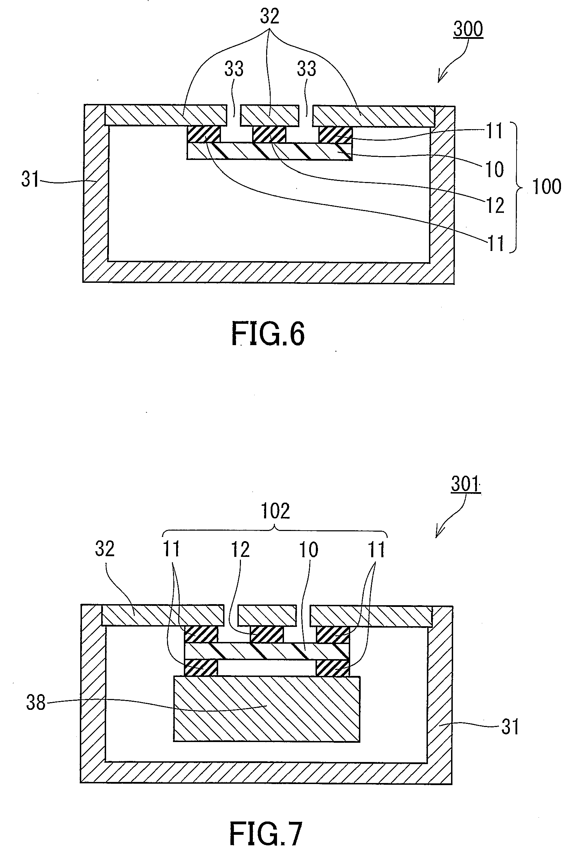

FIG. 5 is a top view showing an embodiment of an acoustic component 300 including the waterproof sound transmitting member 100. FIG. 6 is a cross-sectional view of the acoustic component 300, taken along the line X-X in FIG. 5. In the acoustic component 300, a housing is formed of a storage case 31 and a perforated plate 32 covering an opening of the storage case 31. A transducer (for example, a speaker, a microphone, or a buzzer) not shown is placed in the storage case 31. The perforated plate 32 has formed therein holes 33 for allowing passage of sound between the interior and exterior of the housing. In FIG. 5, a broken line 34 indicates the position of the outer edge of the first adhesive sheet 11 and that of the waterproof sound transmitting membrane 11, a broken line 35 indicates the position of the inner edge of the first adhesive sheet 11, and a broken line 36 indicates the position of the outer edge of the second adhesive sheet 12. The waterproof sound transmitting member 100 is fixed to the inner surface of the perforated plate 32 by the first adhesive sheet 11 and the second adhesive sheet 12 so as to cover the holes 33. When viewed in the direction perpendicular to the first surface of the waterproof sound transmitting membrane 10, the holes 33 are located in a ring-shaped region inside the line 35 of the inner edge of the first adhesive sheet 11 and outside the line 36 of the outer edge of the second adhesive sheet 12.

The first adhesive sheet 11 fixes the waterproof sound transmitting membrane 10 and the housing together and prevents water from entering the housing together with the waterproof sound transmitting membrane 10. Thus, the first adhesive sheet 11 serves to provide waterproof function to the acoustic component 300. The second adhesive sheet 12 fixes the waterproof sound transmitting membrane 10 and the housing together in the region surrounded by the first adhesive sheet 11. Thus, the second adhesive sheet 12 serves to prevent sagging of the waterproof sound transmitting membrane 10. Preventing sagging of the waterproof sound transmitting membrane 10 makes it possible to avoid a contact of the waterproof sound transmitting membrane 10 with the surrounding components and sound distortion. Since the second adhesive sheet 12 is spaced from the first adhesive sheet 11, the region to which the waterproof sound transmitting membrane 10 is exposed forms a single continuous region. When the membrane is divided into regions, the sound energy passing through a smaller area region does not sufficiently contribute to increase the total sound energy passing through the membrane. Therefore, a configuration in which the waterproof sound transmitting membrane is exposed to a single continuous region is advantageous in reducing the loss of sound energy.

The shapes of the waterproof sound transmitting membrane 10, the first adhesive sheet 11, and the second adhesive sheet 12 may be determined as appropriate depending on the position, shape, size, etc. of the holes 33 of the perforated plate 32. For example, the shape of the first adhesive sheet 11 may be determined so that the holes 33 to be protected from water can be located inside the inner edge 35 of the first adhesive sheet 11. The shape of the first adhesive sheet 11 may be determined so that the outer edge 34 of the first adhesive sheet 11 and the outer edge of the waterproof sound transmitting membrane 10 coincide with each other.

The second adhesive sheet 12 is disposed inside the inner edge 35 of the first adhesive sheet 11 and is spaced from the first adhesive sheet 11. The shape of the second adhesive sheet 12 may be determined so that the second adhesive sheet 12 does not extend into the region in which the holes 33 are formed. In order to cause the waterproof sound transmitting membrane 10 to vibrate uniformly and reduce the loss of sound energy, it is preferable that the center of gravity of the second adhesive sheet 12 (22) coincide with that of the region surrounded by the inner edge 15 (35) of the first adhesive sheet 11 (21), when viewed in the direction perpendicular to the first surface of the waterproof sound transmitting membrane 10 (20), as in the waterproof sound transmitting member 100 (200) shown in FIG. 1 (FIG.2). It is more preferable that the center of gravity of the second adhesive sheet 12 (22) also coincide with that of the waterproof sound transmitting membrane 10 (20).

In the waterproof sound transmitting member 100 (200) shown in FIG. 1 (FIG. 2), the adhesive sheets 11 (21) and 12 (22) are disposed on only one of the two principal surfaces (i.e., the first surface) of the waterproof sound transmitting membrane 10 (20), as shown in FIG. 3. However, the arrangement of adhesive sheets is not limited to this. For example, as in a waterproof sound transmitting member 102 shown in FIG. 4, adhesive sheets may be arranged so that a first adhesive sheet 11a and a second adhesive sheet 12a are disposed on the first surface of the waterproof sound transmitting membrane 10 and a third adhesive sheet 11b having a closed frame shape is disposed on the principal surface (second surface) opposite to the first surface. No other adhesive sheet than the third adhesive sheet 11b is disposed on the second surface. Preferably, the third adhesive sheet 11b has the same shape as the first adhesive sheet 11a.

In the case where the waterproof sound transmitting member 102 having a cross-sectional structure shown in FIG. 4 is used, for example, an acoustic component 301 having a cross-sectional structure shown in FIG. 7 can be obtained. The acoustic component 301 includes a transducer 38 inside the housing formed of the storage case 31 and the perforated plate 32. The waterproof sound transmitting member 102 is fixed to the perforated plate 32 by the first adhesive sheet 11 and the second adhesive sheet 12 that are disposed on one of the principal surfaces of the waterproof sound transmitting membrane 10, and is fixed to the transducer 38 by the adhesive sheet (third adhesive sheet) disposed on the other principal surface of the waterproof sound transmitting membrane 10.

Sound passes through the region to which the waterproof sound transmitting membrane 10 is exposed, that is, the frame-shaped region between the inner edge of the first adhesive sheet 11 and the outer edge of the second adhesive sheet 12, and thus is transmitted. The larger the exposure area of the waterproof sound transmitting membrane 10, the smaller the loss of sound energy caused by the passage of sound through the waterproof sound transmitting membrane 10. Therefore, in the case where the waterproof sound transmitting membrane 10 includes the third adhesive sheet, it is preferable that, as shown in FIG. 4, the first adhesive sheet 11a and the third adhesive sheet 11b not only have the same shape but also be located at the same position when viewed in the direction perpendicular to the principal surface of the waterproof sound transmitting membrane 10. That is, it is preferable that the outer edge and the inner edge of the frame-shaped first adhesive sheet 11a coincide with those of the frame-shaped third adhesive sheet 11b in the thickness direction of the waterproof sound transmitting membrane 10.

The thickness of the waterproof sound transmitting membrane 10 can be adjusted as appropriate depending on the waterproofness, strength and sound transmission required, the configuration of the acoustic component 300, etc. The thickness of the waterproof sound transmitting membrane 10 is, for example, 5 to 100 µm.

Preferably, the unwrinkled and unsagged waterproof sound transmitting membrane 10 having a flat principal surface is attached to the housing with the first adhesive sheet 11 and the second adhesive sheet 12 interposed therebetween. In order to facilitate the attachment of the membrane, it is preferable that the first adhesive sheet 11 and the second adhesive sheet 12 have the same thickness. The thinner first and second adhesive sheets 11 and 12 are preferred in terms of miniaturization of the acoustic component 300. However, if the thickness of the first adhesive sheet 11 and the second adhesive sheet 12 is too small, the waterproof sound transmitting membrane 10 vibrated by sound waves may come into contact with other components such as the perforated plate 32, or the waterproof sound transmitting membrane 10 may be more susceptible to damage from outside foreign substances passing through the holes 33, depending on the structure of the acoustic component 300. The thickness of the first adhesive sheet 11 and the second adhesive sheet 12 may be, for example, 30 µm to 200 µm.

The width of the frame formed by the first adhesive sheet 11, that is, the distance between the outer edge 34 and the inner edge 35 of the first adhesive sheet 11 is suitably 0.5 mm to 5 mm, for example, for ensuring waterproofness, although the suitable width may vary depending on the structure of the acoustic component 300 to which the waterproof sound transmitting member 100 is to be attached.

The materials that can be used for the waterproof sound transmitting membrane 10 are, for example, polymer films made of polymers, such as polyethylene, polypropylene, polyimide, polyethylene terephthalate, and polytetrafluoroethylene (PTFE), and porous membranes made from the polymer films, water-repellent nonwoven fabrics, and nanofiber membranes. The waterproof sound transmitting membrane 10 is a single layer sheet, but it may be a layered product of sheets. Preferably, the waterproof sound transmitting membrane 10 includes a porous PTFE membrane because of its high water repellency and high sound transmission.

As the adhesive sheets such as the first adhesive sheet 11 and the second adhesive sheet 12, double-sided adhesive tapes, in particular, sheets including a base material layer and an acrylic or silicone adhesive layers disposed on both sides of the base material layer are suitably used.

The present invention is particularly effective when it is applied to a waterproof sound transmitting member including a large-diameter waterproof sound transmitting membrane, because such a large-diameter waterproof sound transmitting membrane is likely to sag under its own weight and thus to come into contact with the surrounding components, causing sound distortion. Therefore, it is preferable to apply the present invention to a waterproof sound transmitting member including a waterproof sound transmitting membrane with a maximum diameter of 3 mm or more, in particular, 5 mm or more, for example, 7 mm to 20 mm. As used herein, the maximum diameter refers to the longest length of a line passing through the center of gravity of the principal surface of the waterproof sound transmitting membrane.

The waterproof sound transmitting member of the present invention can be used as a member attachable to acoustic components in various acoustic devices. The waterproof sound transmitting member of the present invention has a structure suitable for preventing sagging of a waterproof sound transmitting membrane, while ensuring sound transmission. The waterproof sound transmitting member of the present invention is also suitable for reducing a space in a housing required for attachment of a waterproof sound transmitting member. The waterproof sound transmitting member of the present invention can be suitably used particularly for acoustic devices in small electronic devices, such as microphones in cellular phones.

## Claims

1. A waterproof sound transmitting member (100) comprising:
a waterproof sound transmitting membrane (10) that allows sound to pass therethrough and prevents water from passing therethrough, the waterproof sound transmitting membrane having a first surface and a second surface opposite to the first surface,
a first adhesive sheet (11) disposed on the first surface,
wherein when viewed in a direction perpendicular to the first surface, the first adhesive sheet has a closed frame shape,
a second adhesive sheet (12) disposed on the first surface, the second adhesive sheet being disposed within the frame formed by the first adhesive sheet (11) and being spaced from the first adhesive sheet,
the waterproof sound transmitting member (100) being **characterized in that** the waterproof sound transmitting membrane (10) has a maximum diameter of 7 mm to 20 mm, and **in that** when viewed in the direction perpendicular to the first surface, an area of the second adhesive sheet (12) is at least one tenth and not more than one half an area of a region surrounded by an inner edge of the frame formed by the first adhesive sheet (11).

2. The waterproof sound transmitting member according to claim 1, wherein no adhesive sheet is disposed on the second surface.

3. The waterproof sound transmitting member according to claim 1, further comprising a third adhesive sheet disposed on the second surface,
wherein
no other adhesive sheet than the third adhesive sheet is disposed on the second surface, and
the third adhesive sheet has the same closed frame shape as the first adhesive sheet (11).

4. The waterproof sound transmitting member according to any one of claims 1 to 3, wherein a material of the waterproof sound transmitting membrane (10) is selected from polymer films made of polymers and porous membranes made from the polymer films.

5. The waterproof sound transmitting member according to any one of claims 1 to 3, wherein the waterproof sound transmitting membrane (10) comprises a porous polytetrafluoroethylene membrane.

6. The waterproof sound transmitting member according to any one of claims 1 to 5, wherein when viewed in the direction perpendicular to the first surface, the center of gravity of the second adhesive sheet (12) coincides with the center of gravity of the region surrounded by an inner edge of the first adhesive sheet (11).

7. The waterproof sound transmitting member according to any one of claims 1 to 6, wherein the first adhesive sheet (11) and the second adhesive sheet (12) have the same thickness.

8. The waterproof sound transmitting member according to any one of claims 1 to 7, wherein
a region to which the waterproof sound transmitting membrane (10) is exposed is a frame-shaped region between an inner edge of the first adhesive sheet (11) and an outer edge of the second adhesive sheet (12).

9. The waterproof sound transmitting member according to any one of claims 1 to 8, wherein
the first adhesive sheet (11) is configured to fix the waterproof sound transmitting membrane (10) and a housing (31, 32) together, and
the second adhesive sheet (12) is configured to fix the waterproof sound transmitting membrane and the housing together in the region surrounded by the first adhesive sheet (11).

## Patentansprüche

1. Wasserdichtes Schallübertragungselement (100), umfassend:
eine wasserdichte Schallübertragungsmembran (10), die einen Durchgang von Schall durch die Membran gestattet und einen Durchgang von Wasser durch die Membran verhindert, wobei die wasserdichte Schallübertragungsmembran eine erste Fläche und eine der ersten Fläche gegenüberliegende zweite Fläche aufweist,
eine erste Klebefolie (11), die an der ersten Fläche angeordnet ist,
wobei die erste Klebefolie in einer senkrecht zu der ersten Fläche verlaufenden Richtung betrachtet die Form eines geschlossenen Rahmens aufweist,
eine zweite Klebefolie (12), die an der ersten Fläche angeordnet ist, wobei die zweite Klebefolie in dem Rahmen, der durch die erste Klebefolie (11) gebildet wird, angeordnet ist und von dem ersten Rahmen beabstandet ist,
wobei das wasserdichte Schallübertragungselement (100) **dadurch gekennzeichnet ist, dass** die wasserdichte Schallübertragungsmembran (10) einen Höchstdurchmesser vom 7 mm bis 20 mm aufweist, und dass eine Flächenausdehnung der zweiten Klebefolie (12) in einer senkrecht zu der ersten Fläche verlaufenden Richtung betrachtet zumindest ein Zehntel und nicht mehr als die Hälfte einer Flächenausdehnung eines Bereichs beträgt, der durch einen Innenrand des Rahmens, der durch die erste Klebefolie (11) gebildet wird, umgeben ist.

2. Wasserdichtes Schallübertragungselement nach Anspruch 1, wobei an der zweiten Fläche keine Klebefolie angeordnet ist.

3. Wasserdichtes Schallübertragungselement nach Anspruch 1, ferner umfassend eine dritte Klebefolie, die an der zweiten Fläche angeordnet ist,
wobei
an der zweiten Fläche keine andere Klebefolie als die dritte Klebefolie angeordnet ist, und
die dritte Klebefolie die gleiche Form eines geschlossenen Rahmens wie die erste Klebefolie (11) aufweist.

4. Wasserdichtes Schallübertragungselement nach einem der Ansprüche 1 bis 3, wobei ein Material der wasserdichten Schallübertragungsmembran (10) aus Polymerfilmen, die aus Polymeren hergestellt sind, und porösen Membranen, die aus den Polymerfilmen hergestellt sind, gewählt ist.

5. Wasserdichtes Schallübertragungselement nach einem der Ansprüche 1 bis 3, wobei die wasserdichte Schallübertragungsmembran (10) eine poröse Polytetrafluorethylenmembran umfasst.

6. Wasserdichtes Schallübertragungselement nach einem der Ansprüche 1 bis 5, wobei der Schwerpunkt der zweiten Klebefolie (12) in der senkrecht zu der ersten Fläche verlaufenden Richtung betrachtet mit dem Schwerpunkt des Bereichs, der durch einen Innenrand der ersten Klebefolie (11) umgeben ist, übereinstimmt.

7. Wasserdichtes Schallübertragungselement nach einem der Ansprüche 1 bis 6, wobei die erste Klebefolie (11) und die zweite Klebefolie (12) die gleiche Dicke aufweisen.

8. Wasserdichtes Schallübertragungselement nach einem der Ansprüche 1 bis 7, wobei
ein Bereich, zu dem die wasserdichte Schallübertragungsmembran (10) freiliegt, ein rahmenförmiger Bereich zwischen einem Innenrand der ersten Klebefolie (11) und einem Außenrand der zweiten Klebefolie (12) ist.

9. Wasserdichtes Schallübertragungselement nach einem der Ansprüche 1 bis 8, wobei
die erste Klebefolie (11) ausgebildet ist, um die wasserdichte Schallübertragungsmembran (10) und ein Gehäuse (31, 32) aneinander zu fixieren, und
die zweite Klebefolie (12) ausgebildet ist, um die wasserdichte Schallübertragungsmembran und das Gehäuse in dem Bereich, der durch die erste Klebefolie (11) umgeben ist, aneinander zu fixieren.

## Revendications

1. Elément de transmission de son étanche à l'eau (100) comprenant :
une membrane de transmission de son étanche à l'eau (10) qui permet au son de passer à travers celle-ci et empêche l'eau de passer à travers celle-ci, la membrane de transmission de son étanche à l'eau ayant une première surface et une seconde surface opposée à la première surface,
une première feuille adhésive (11) disposée sur la première surface,
dans lequel, lorsque l'on regarde dans une direction perpendiculaire à la première surface, la première feuille adhésive a une forme de cadre fermé,
une deuxième feuille adhésive (12) disposée sur la première surface, la deuxième feuille adhésive étant disposée dans le cadre formé par la première feuille adhésive (11) et étant espacée de la première feuille adhésive,
l'élément de transmission son étanche à l'eau (100) étant **caractérisé en ce que** la membrane de transmission de son étanche à l'eau (10) a un diamètre maximum de 7 mm à 20 mm, et **en ce que**, lorsque l'on regarde dans la direction perpendiculaire à la première surface, une superficie de la deuxième feuille adhésive (12) représente au moins un dixième et pas plus de la moitié d'une superficie d'une région entourée par un bord interne du cadre formé par la première feuille adhésive (11).

2. Elément de transmission de son étanche à l'eau selon la revendication 1, dans lequel aucune feuille adhésive n'est disposée sur la seconde surface.

3. Elément de transmission de son étanche à l'eau selon la revendication 1, comprenant en outre une troisième feuille adhésive disposée sur la seconde surface,
dans lequel
aucune autre feuille adhésive à part la troisième feuille adhésive n'est disposée sur la seconde surface, et
la troisième feuille adhésive a la même forme de cadre fermé que la première feuille adhésive (11).

4. Elément de transmission de son étanche à l'eau selon l'une quelconque des revendications 1 à 3, dans lequel un matériau de la membrane de transmission de son étanche à l'eau (10) est choisi parmi les films polymères réalisés à partir de polymères et les membranes poreuses réalisées à partir des films polymères.

5. Elément de transmission de son étanche à l'eau selon l'une quelconque des revendications 1 à 3, dans lequel la membrane de transmission de son étanche à l'eau (10) comprend une membrane poreuse en polytétrafluoroéthylène.

6. Elément de transmission de son étanche à l'eau selon l'une quelconque des revendications 1 à 5, dans lequel, lorsque l'on regarde dans la direction perpendiculaire à la première surface, le centre de gravité de la deuxième feuille adhésive (12) coïncide avec le centre de gravité de la région entourée par un bord interne de la première feuille adhésive (11).

7. Elément de transmission de son étanche à l'eau selon l'une quelconque des revendications 1 à 6, dans lequel la première feuille adhésive (11) et la deuxième adhésive (12) ont la même épaisseur.

8. Elément de transmission de son étanche à l'eau selon l'une quelconque des revendications 1 à 7, dans lequel
une région à laquelle la membrane de transmission de son étanche à l'eau (10) est exposée, est une région en forme de cadre entre un bord interne de la première feuille adhésive (11) et un bord externe de la deuxième feuille adhésive (12).

9. Elément de transmission de son étanche à l'eau selon l'une quelconque des revendications 1 à 8, dans lequel
la première feuille adhésive (11) est configurée pour fixer la membrane de transmission de son étanche à l'eau (10) et un boîtier (31, 32) ensemble, et
la deuxième feuille adhésive (12) est configurée pour fixer la membrane de transmission de son étanche à l'eau et le boîtier ensemble, dans la région entourée par la première feuille adhésive (11).
